(19) Europäisches Patentamt
European Patent Office
Office européen des brevets

(11) **EP 2 226 143 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
***B23C 5/10*** *(2006.01)*    ***B23C 5/14*** *(2006.01)*

(21) Anmeldenummer: **10155472.3**

(22) Anmeldetag: **04.03.2010**

(54) **Fräskopf für eine Fräsmaschine zum Herstellen von Brillengläsern aus Kunststoff**

Cutting head for a milling machine for manufacturing ophthalmic lenses made of plastic

Tête de fraisage pour une fraiseuse pour la fabrication des verres à lunettes en matière plastique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.03.2009 DE 102009011195**

(43) Veröffentlichungstag der Anmeldung:
**08.09.2010 Patentblatt 2010/36**

(73) Patentinhaber: **Schneider GmbH & Co. KG**
**35112 Fronhausen (DE)**

(72) Erfinder:
• **Schneider, Gunter**
**35037, Marburg (DE)**
• **Buchenauer, Helwig**
**35232, Dautphetal-Buchenau (DE)**
• **Krämer, Klaus**
**35232, Dautphetal-Friedensdorf (DE)**

(74) Vertreter: **Thews, Gustav**
**STT Sozietät Thews & Thews**
**Patentanwälte**
**Augustaanlage 32**
**68165 Mannheim (DE)**

(56) Entgegenhaltungen:
**DE-U1- 20 205 995     DE-U1- 20 215 460**

• **SANDVIK COROMANT: "ROTATING TOOLS CATALOGUE" Februar 2001 (2001-02), AB SANDVIK COROMANT , SWEDEN , XP002586599 * A60, A62, A152, E28 ***

**Beschreibung**

Die Erfindung bezieht sich auf einen Fräskopf für eine Fräsmaschine zum Herstellen von Brillengläsern aus Kunststoff, aufweisend eine Rotationsachse, ein Kupplungsteil zum Einspannen in ein Frässpindelfutter, eine an das Kupplungsteil anschließende Schulter mit einer axialen Anschlagfläche für das Frässpindelfutter, einen an die Schulter anschließenden Schaft sowie einen an den Schaft anschließenden, mehrere Schneidplatten mit einem Radius R aufweisenden Schneidenkranz mit einem Außendurchmesser D, wobei zwischen dem Schneidenkranz auf Höhe des Außendurchmessers D und der Anschlagfläche eine freie Länge L vorgesehen ist. Als Außendurchmesser D wird der maximale Durchmesser des Fräskopfes bzw. des Schneidenkranzes bezeichnet.

Als freie Länge L wird mit Bezug zu der Richtung der Rotationsachse der Abstand zwischen der an das Frässpindelfutter in axialer Richtung anlegbaren Anschlagfläche des Kupplungsteils und dem Schneidenkranz bezeichnet, wobei am Schneidenkranz die Position am Außendurchmesser D maßgebend ist.

Es sind bereits Fräsköpfe zum spanenden Bearbeiten von Brillengläsern verschiedenster Art aus dem Stand der Technik bekannt. Die bekannten Fräsköpfe haben in der Regel je nach Durchmesser zwischen fünf und zehn Schneiden. Mehr Schneiden sind ohne Weiteres nicht realisierbar, denn der halbe Durchmesser bzw. Radius des Fräskopfes muss kleiner sein als der herzustellende Radius des Brillenglases. Demnach ist das zur Verfügung stehende Platzangebot am Umfang des Fräskopfes begrenzt.

Die DE 10 2006 007 204 B4 beschreibt ein Werkzeug zur spanabtragenden Bearbeitung von Materialien in der Optikfertigung mit einer Mittelachse M, mit mindestens einer geometrisch definierten Frässchneide und mit mindestens einer definierten Drehschneide, an der das zu bearbeitende Werkstück vorbeibewegt wird, wobei eine Bezugsebene gegeben ist, die eine die Mittelachse M des Werkzeugs schneidende Längsachse, die mit der Mittelachse M einen Winkel $\alpha$ einschließt, sowie eine Querachse, die die Längsachse unter einem Winkel von 90° schneidet, aufweist.

Nach der DE 101 43 848 C2 ist ein Werkzeug zur Flächenbearbeitung von Werkstücken aus nicht sprödharten Materialien in der Optikfertigung bekannt, welches einen Grundkörper, in dem eine Mehrzahl von Frässchneiden vorgesehen ist, aufweist, und die Frässchneiden bei einer Drehung des Werkzeugs um eine Werkzeugdrehachse in einer Ebene senkrecht zur Werkzeugdrehachse einen Flugkreis definieren, wobei am Grundkörper auch mindestens eine Drehschneide vorgesehen ist, die gegenüber dem Flugkreis der Frässchneiden um einen vorbestimmten Betrag radial nach innen versetzt angeordnet ist. Ein Fräskopf gemäß dem Oberbegriff des Anspruchs 1 ist aus DE 202 15 460 U1 bekannt.

SANDVIC COROMANT: "Rotating Tools Catalogue", Februar 2001, AB SANDVIC COROMANT, SWEDEN beschreibt Fräsköpfe und dazugehörige Schäfte in verschiedenen Dimensionen, darunter auch den Fräskopf "Arbor" 80 mm und den Schaft C5-391.05-27 025, die in Kombination die Bedingung |L| = 0,18 (|D|-2|R|) + 54 $\pm$ a, mit a = 2,76 erfüllen.

Der Erfindung liegt die Aufgabe zugrunde, einen Fräskopf derart auszubilden und anzuordnen, dass das Schwingungsverhalten im Betrieb eine hochpräzise Bearbeitung von Brillengläsern gewährleistet.

Gelöst wird die Aufgabe erfindungsgemäß durch die Merkmale des Anspruchs 1. Bei der Herstellung von Brillengläsern werden Fräsköpfe eingesetzt, die mit einer Drehzahl von etwa 25000 U/min betreibbar sind. Da die Drehzahl und die Anzahl der Schneiden unmittelbar Einfluss auf die Anregungsfrequenz bei der Bearbeitung haben, ist eine optimale und angepasste Ausbildung der Geometrie des Fräskopfes notwendig. **Mit der Kombination des Merkmals,** dass der Betrag der freien Länge L im Verhältnis zu dem Betrag des Außendurchmessers D und dem Betrag des Radius R die Bedingung |L| = 0, 18 (|D|-2|R|) + 54 $\pm$ a mit einer maximalen Abweichung a von 2, 1 oder 0,5 erfüllt, **mit dem Merkmal, dass der Schaft über eine Länge 1, die mindestens 50 % der Länge L beträgt, einen Durchmesser d zwischen 10 mm und 32 mm oder höchstens 16 mm oder 26 mm aufweist,** werden negative Einflüsse der Anregungsfrequenz zumindest teilweise unterdrückt bzw. kompensiert. Somit ist die Herstellung hochpräziser Brillenoberflächen **sowie die Bearbeitung von Brillengläsern mit einem kleinen Krümmungsradius trotz Optimierung des Schwingungsverhaltens möglich.**

Die Länge L, der Außendurchmesser D und der Radius R der Schneidplatte weisen die Einheit [mm] auf. Der Betrag dieser Größen ist dimensionslos und bezeichnet den Zahlenwert des jeweiligen Maßes bzw. den Abstand des jeweiligen Zahlenwertes zu der Null.

Ferner kann es vorteilhaft sein, wenn die Länge l zwischen 80 % und 120 % oder 100 % des Außendurchmessers D beträgt. Eine kleinere Länge l wäre zwar für das Schwingungsverhalten von Vorteil. Jedoch wären in diesem Fall die Varianten der herzustellenden Linsenformen beschränkt.

Vorteilhaft kann es auch sein, wenn der Schneidenkranz über seinen Umfang U zwölf Schneidplatten aufweist. Die Anregung der Schwingung ist unter anderem abhängig von der Anzahl der Schneiden. Die vorstehend genannte Anzahl der Schneiden hat einen positiven Einfluss auf das Schwingungsverhalten des Fräskopfes.

Weitere Vorteile und Einzelheiten der Erfindung sind in den Patentansprüchen und in der Beschreibung erläutert und in den Figuren dargestellt. Es zeigen:

Figur 1    eine Prinzipskizze eines Fräskopfes mit Brillenglas;

Figur 2a    eine Seitenansicht des Fräskopfes;

Figur 2b    eine Vorderansicht des Fräskopfes;

Figur 3    eine Vorderansicht eines Fräskopfes.

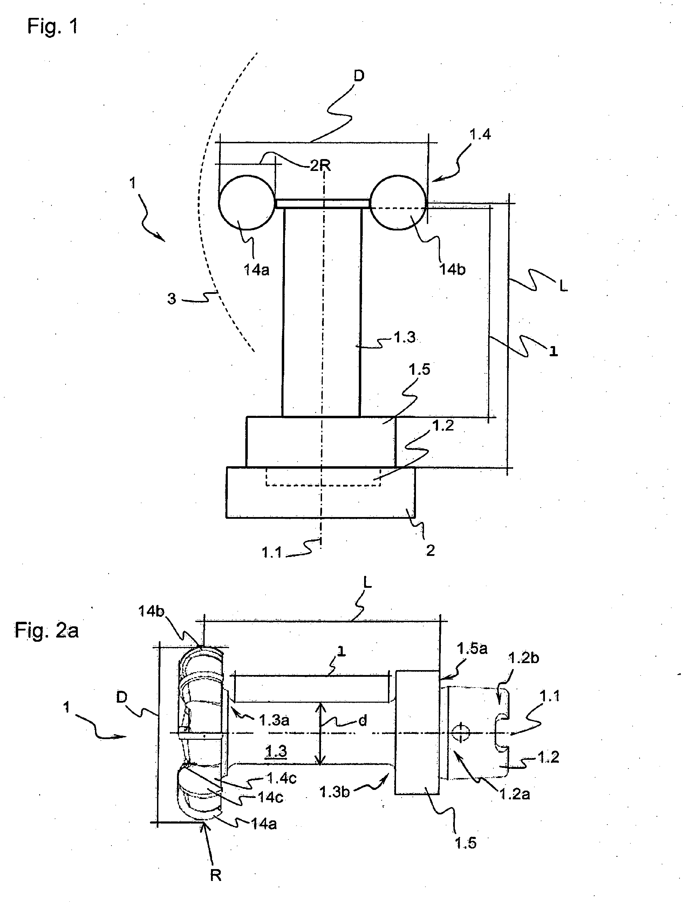

Gemäß Prinzipskizze nach Figur 1 weist ein Fräskopf 1 für eine Fräsmaschine zum Herstellen von Brillengläsern aus Kunststoff eine Rotationsachse 1.1 auf, um die er rotierend antreibbar ist. Zum Einspannen in ein Frässpindelfutter 2 weist der Fräskopf 1 ein Kupplungsteil 1.2 auf. An das Kupplungsteil 1.2 schließt eine Schulter 1.5 an. Ausgehend von der Schulter 1.5 ist ein Schaft 1.3 vorgesehen, an dessen Ende ein Schneidenkranz 1.4 mit einem Außendurchmesser D vorgesehen ist. Ausgehend vom Schneidenkranz 1.4 auf die Höhe des maximalen Durchmessers D beträgt die freie Länge L inklusive Schaft 1.3 und Schulter 1.5 etwa 60 mm. An dem Schneidenkranz 1.4 sind zwei Schneidplatten 14a, 14b mit dem Durchmesser 2R skizziert. Seitlich zum Schneidenkranz 1.4 ist eine zu bearbeitende Brillenglasoberfläche 3 skizziert, die mittels des Schneidenkranzes 1.4 bzw. der Schneidplatten 14a, 14b bearbeitet werden kann. Über das Kupplungsteil 1.2 wird der Fräskopf 1 in dem Frässpindelfutter 2 gehalten. Dabei liegt der Fräskopf 1 über die Schulter 1.5 in axialer Richtung der Rotationsachse 1.1 gegen das Frässpindelfutter 2 an.

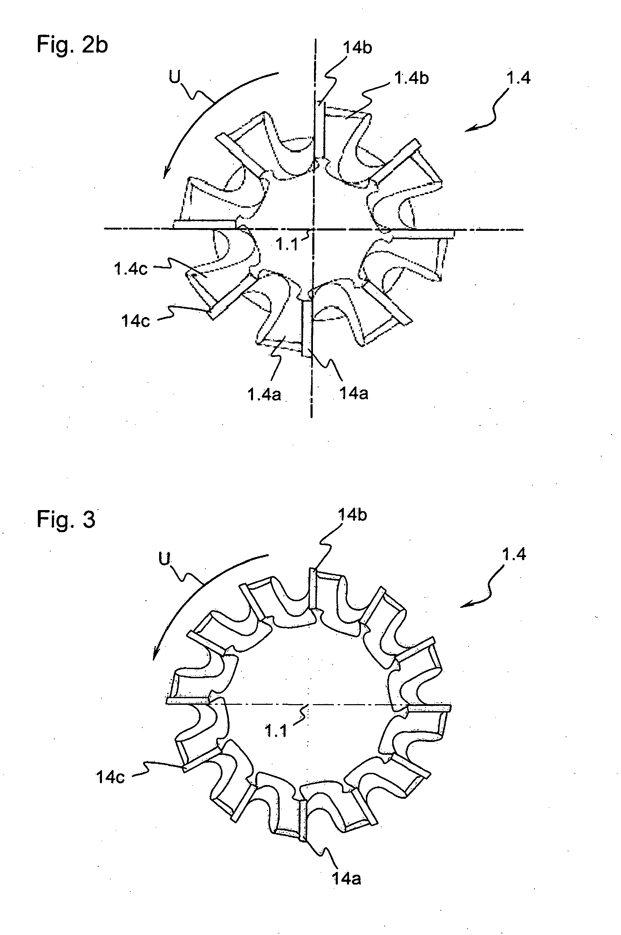

Nach Ausführungsbeispiel Figur 2 weist der Schneidenkranz 1.4 mehrere Schneidplatten 14a, 14b, 14c mit einem Radius R auf. Der Schneidenkranz 1.4 schließt unmittelbar an den Schaft 1.3 an, wobei ein Übergangsradius 1.3a vorgesehen ist. In entsprechender Weise schließt der Schaft 1.3 über einen Übergangsradius 1.3b an die Schulter 1.5 an. Die Schulter 1.5 weist zudem eine Anschlagfläche 1.5a auf, gegen die das Frässpindelfutter 2 in axialer Richtung der Rotationsachse 1.1 zur Anlage bringbar ist. Die Länge L bezeichnet mit Bezug zu der Richtung der Rotationsachse 1.1 den Abstand zwischen der Anschlagfläche 1.5a und dem Schneidenkranz 1.4 auf der Höhe des maximalen Durchmessers D. Das Kupplungsteil 1.2 schließt an die Schulter 1.5 an und weist verschiedene, nicht näher bezeichnete Halte- und Ausrichtmittel 1.2a, 1.2b auf.

Gemäß Ansicht von vorne nach Figur 2b weist der Fräskopf 1 bzw. der Schneidenkranz 1.4 acht Schneiden bzw. Schneidplatten 14a, 14b, 14c auf, die über einen Umfang U verteilt sind. Die Schneidplatten 14a, 14b, 14c sind an einem entsprechenden Finger 1.4a, 1.4b, 1.4c des Schneidenkranzes 1.4 befestigt. Dabei weist die jeweilige Schneidplatte 14a, 14b, 14c eine halbkreisförmige Form mit einer Größe auf, die wie in Figur 2a zu sehen etwa 50 % bis 80 % der Oberfläche des jeweiligen Fingers 1.4c beträgt.

Nach dem Ausführungsbeispiel Figur 3 weist der Fräskopf 1 zwölf Schneiden bzw. Schneidplatten 14a, 14b, 14c auf, die über den Umfang U verteilt sind.

Bezugszeichenliste

| 1 | Fräskopf |
| 1.1 | Rotationsachse |
| 1.2 | Kupplungsteil |
| 1.2a | Halte- und Ausrichtmittel |
| 1.2b | Halte- und Ausrichtmittel |
| 1.3 | Schaft |
| 1.3a | Übergangsradius |
| 1.3b | Übergangsradius |
| 1.4 | Schneidenkranz |
| 1.4a | Finger |
| 1.4b | Finger |
| 1.4c | Finger |
| 1.5 | Schulter |
| 1.5a | Anschlagfläche |
| 2 | Frässpindelfutter |
| 3 | Brillenglasfläche |
| 14a | Schneidplatte |
| 14b | Schneidplatte |
| 14c | Schneidplatte |
| d | Durchmesser |
| D | Außendurchmesser |
| l | Länge, Schaftlänge |
| L | Länge |
| R | Radius |
| U | Umfang |

**Patentansprüche**

1.    Fräskopf (1) für eine Fräsmaschine zum Herstellen von Brillengläsern aus Kunststoff, aufweisend eine Rotationsachse (1.1), ein Kupplungsteil (1.2) zum Einspannen in ein Frässpindelfutter (2), eine an das Kupplungsteil (1.2) anschließende Schulter (1.5) mit einer Anschlagfläche (1.5a) für das Frässpindelfutter (2), einen an die Schulter (1.5) anschließenden Schaft (1.3) sowie einen an den Schaft (1.3) anschließenden, mehrere Schneidplatten (14a, 14b, 14c) mit einem Radius R aufweisenden Schneidenkranz (1.4) mit einem Außendurchmesser D, wobei zwischen dem Schneidenkranz (1.4) auf Höhe des Außendurchmessers D und der Anschlagfläche (1.5a) eine freie Länge L vorgesehen ist,
**dadurch gekennzeichnet,**
**dass** der Betrag der freien Länge L im Verhältnis zu dem Betrag des Außendurchmessers D und dem Betrag des Radius R die folgende Bedingung erfüllt:

$$|L| = 0,18 \ (|D| - 2|R|) + 54 \pm a \ ,$$

mit einer maximalen Abweichung a von 2 **und dass** der Schaft (1.3) über eine Länge l, die mindestens 50 % der Länge L entspricht, einen Durchmesser d zwischen 10 mm und 32 mm oder einen Durchmesser d von höchstens 16 mm oder einen Durchmesser d mit 26 mm aufweist.

2. Fräskopf (1) nach Anspruch 1,
   **dadurch gekennzeichnet,**
   **dass** die Länge l zwischen 80 % und 120 % oder die Länge l 100 % des Außendurchmessers D beträgt.

3. Fräskopf (1) nach einem der vorhergehenden Ansprüche,
   **dadurch gekennzeichnet,**
   **dass** der Schneidenkranz (1.4) über seinen Umfang U zwölf Schneidplatten (14a) aufweist.

## Claims

1. A milling head (1) for a milling machine for manufacturing plastic spectacle lenses having an axis of rotation (1.1), a coupling part (1.2) for chucking into a milling spindle chuck (2), a shoulder (1.5) with a stop face (1.5a) for the milling spindle chuck (2), said shoulder (1.5) adjoining the coupling part (1.2), a shank (1.3) adjoining the shoulder (1.5), as well as a cutting edge ring (1.4) with an outer diameter D, said cutting edge ring (1.4) adjoining the shank (1.3) and having several cutting edges (14a, 14b, 14c) with a radius R, wherein a free length L is provided between the cutting edge ring (1.4) at the height of the outer diameter D and the stop face (1.5a),
   **characterized in**
   **that** in relation to the amount of the outer diameter D and to the amount of the radius R, the amount of the free length L fulfils the following condition:

   $$|L| = 0{,}18 \, (|D|{-}2|R|) + 54 \pm a \, ,$$

   with a maximum deviation a of 2, and that the shank (1.3) has, over a length l that corresponds to at least 50 % of the length L, a diameter d of between 10 mm and 32 mm or a diameter d of not more than 16 mm or a diameter d of 26 mm.

2. The milling head (1) according to Claim 1,
   **characterized in**
   **that** the length l amounts to between 80 % and 120 % or the length l amounts to 100 % of the outer diameter D.

3. The milling head (1) according to any one of the preceding claims,
   **characterized in**
   **that** the cutting edge ring (1.4) has twelve cutting edges (14a) along its circumference U.

## Revendications

1. Tête de fraisage (1) pour une fraiseuse destinée à la fabrication de verres de lunettes en matière synthétique, présentant un axe de rotation (1.1), un élément d'accouplement (1.2) pour le serrage dans un mandrin de serrage de broche porte-fraise (2), un épaulement (1.5) adjacent à l'élément d'accouplement (1.2) avec une surface de butée (1.5a) pour le mandrin de serrage de broche porte-fraise (2), une queue (1.3) adjacente à l'épaulement (1.5) ainsi qu'un disque porte-lames (1.4) adjacent à la queue (1.3) pourvu de plusieurs plaquettes de coupe (14a, 14b, 14c) de rayon R et ayant un diamètre extérieur D, une longueur libre L étant prévue entre le disque porte-lames (1.4) au niveau du diamètre extérieur D et la surface de butée (1.5a),
   **caractérisée en ce que**
   la valeur de la longueur libre L satisfait à la relation suivante par rapport à la valeur du diamètre extérieur D et à la valeur du rayon R:

   $$|L| = 0{,}18 \, (|D|{-}2|R|) + 54 \pm a \, ,$$

   avec un écart maximal a égal à 2, et **en ce que** la queue (1.3) a une longueur l correspondant à au moins 50 % de la longueur L, un diamètre d compris entre 10 mm et 32 mm ou un diamètre d égal à 16 mm au maximum ou un diamètre d égal à 26 mm.

2. Tête de fraisage (1) selon la revendication 1,
   **caractérisée en ce que**
   la longueur l représente entre 80 % et 120 % du diamètre extérieur D ou la longueur l représente 100 % de celui-ci.

3. Tête de fraisage (1) selon l'une des revendications précédentes,
   **caractérisée en ce que**
   le disque porte-lames (1.4) présente douze plaquettes de coupe (14a) sur sa périphérie U.

Fig. 1

Fig. 2a

**Fig. 2b**

U

14b

1.4b

1.4

1.1

1.4c

14c

1.4a

14a

**Fig. 3**

14b

U

1.4

1.1

14c

14a

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006007204 B4
- DE 10143848 C2

- DE 20215460 U1

**In der Beschreibung aufgeführte Nicht-Patentliteratur**

- **SANDVIC COROMANT.** Rotating Tools Catalogue. *AB SANDVIC COROMANT, SWEDEN,* Februar 2001